# EUROPÄISCHE PATENTANMELDUNG

(11) **EP 2 026 091 A1**
(43) Veröffentlichungstag der Anmeldung: **18.02.2009**
(21) Anmeldenummer: 07450138.8
(22) Anmeldetag: 16.08.2007
(51) Int. Cl.: G01S 5/14, G01S 13/74, G08G 1/123

(54) **Verfahren zur automatischen Identifikation und Ortung von Objekten**

(71) Anmelder: "INET"-Logistics GmbH, 6923 Lauterach (AT)
(72) Erfinder: Böckle, Michael, 6900 Bregenz (AT); Hillbrand, Christian, 6800 Feldkirch (AT); Nigsch, Markus, 6923 Lauterach (AT); Schöch, Robert, 6811 Göfis (AT)
(74) Vertreter: Sonn & Partner Patentanwälte

(57) **Zusammenfassung**

Die Erfindung betrifft ein Verfahren und ein System zur automatischen Identifikation und Ortung von Objekten (1), wobei den Objekten (1) eine eine eindeutige Kennung (IDₒ) enthaltende mobile Kennzeichnungseinheit (2) zugeordnet wird, und die eindeutige Kennung (IDₒ) zusammen mit der jeweiligen Zell- und Basisstationsinformation eines Funknetzes (5) an eine zentrale Einrichtung (6) übermittelt wird, wobei die der Zell- und Basisstationsinformation des Funknetzes (5) zugehörige geographische Position ermittelt und in einer mit der zentralen Einrichtung (6) verbundenen Ortungsdatenbank (7) gespeichert wird und die geographische Position des Objekts (1) über die übermittelte Zell- und Basisstationsinformation aus der Ortungsdatenbank (7) ermittelt wird. Zur Schaffung eines möglichst einfach und kostengünstig implementierbaren Verfahrens und Systems zur Ortung von Objekten ist vorgesehen, dass die der Zell- und Basisstationsinformation des Funknetzes (5) zugehörige geographische Position über Satellitennavigation ermittelt und an die zentrale Einrichtung (6) und an die Ortungsdatenbank (7) übermittelt wird.

## Beschreibung

Die Erfindung betrifft ein Verfahren zur automatischen Identifikation und Ortung von Objekten, insbesondere während des Transports, wobei den Objekten eine eine eindeutige Kennung enthaltende mobile Kennzeichnungseinheit zugeordnet wird, und die eindeutige Kennung zusammen mit der jeweiligen Zell- und Basisstationsinformation eines Funknetzes an eine zentrale Einrichtung übermittelt wird, wobei die der Zell- und Basisstationsinformation dessen Funknetzes gehörige geographische Position ermittelt und in einer mit der zentralen Einrichtung verbundenen Ortungsdatenbank gespeichert wird und die geographische Position des Objekts über die übermittelte Zell- und Basisstationsinformation aus der Ortungsdatenbank ermittelt wird.

Weiters betrifft die Erfindung ein System zur automatischen Identifikation und Ortung von Objekten, insbesondere während des Transports, mit Kennzeichnungseinheiten, welche den Objekten eine eindeutige Kennung zuordnen, welche Kennzeichnungseinheiten Mittel zur drahtlosen Übertragung zumindest der eindeutigen Kennung aufweisen, weiters mit zumindest einer Einrichtung zur Übertragung der Zell- und Basisstationsinformation eines Funknetzes an eine zentrale Einrichtung, wobei die zentrale Einrichtung mit einer Ortungsdatenbank verbunden ist, welche mit einer Einrichtung zum Empfang von Zell- und Basistationsinformationen von Funknetzen und den zugehörigen geographischen Positionen verbunden ist, so dass die geographische Position des Objekts über die übermittelte Zell- und Basisstationsinformation aus der Ortungsdatenbank über entsprechende Algorithmen ermittelbar ist.

Weiters betrifft die Erfindung eine Kennzeichnungseinheit, Leseeinrichtung, mobile Positionsbestimmungseinrichtung und zentrale Einrichtung für ein oben genanntes System zur automatischen Identifikation und Ortung von Objekten.

Unter den Begriff Objekt fallen sowohl Gegenstände, insbesondere zu transportierende Güter, als auch Personen oder Tiere.

Unter Basisstationsinformation eines Funknetzes ist insbesondere die sogenannte Base Transceiver Station (BTS)-Information eines Funknetzes zu verstehen.

Insbesondere im Transportwesen gibt es eine Reihe von Entwicklungen, welche die Ortung oder Nachverfolgung von Gütern zulassen. Dadurch kann der Transportweg der Ware kontrolliert werden. Heutige so genannte "Track- and Trace"-Systeme basieren weitgehend auf einer Barcode-Scannung der Waren an definierten Messpunkten innerhalb der Transportkette. Diese Daten werden gesammelt aufbereitet und Partnerunternehmen bzw. Kunden zeitverzögert elektronisch zur Verfügung gestellt. Die durchgängige Implementierung von Messpunkten innerhalb einer Transportkette ist mit hohen Investitionskosten verbunden sowie der Überwindung von Kommunikationsbarrieren der unterschiedlichen Informationssysteme der am Transport beteiligten Unternehmen. Die Anfangsinvestition und die langen Projektlaufzeiten beeinträchtigen die durchgängige Implementierung.

Die DE 103 44 118 A1 beschreibt ein Verfahren und eine Einrichtung zur Ermittlung der Menge von Objekten, wobei ein Teil der zu ortenden Objekte mit einem Ortungsmodul ausgerüstet wird. Neben dem ortbaren Objekt ist mindestens ein weiteres Objekt mit einem Ortungsmodul versehen, das mit einem Aktivtransponder gekoppelt ist, über welchen einige der weiteren nicht ortbaren Objekte abgefragt werden können. Über statistische Methoden wird die tatsächliche Menge der an einer Ortsposition befindlichen Objekte hochgerechnet. Dadurch, dass nicht alle Objekte mit einem Ortungsmodul oder Transponder verbunden werden müssen, sinkt der Aufwand. Nichtsdestotrotz muss zumindest ein Objekt über ein funktionierendes Ortungssystem, beispielsweise ein Satellitennavigationssystem oder ein System zur Ortung über die Zellinformation des Mobilfunknetzes verfügen. Darüber hinaus können einzelne Objekte der Menge von Objekten nicht geortet werden.

Die US 2005/0062603 A1 beschreibt ein Verfahren und eine Einrichtung, über welche der Zugang zu Einrichtungen, wie z.B. Medikamenten, überwacht werden kann. Zu diesem Zweck ist jedes zu überwachende Objekt mit einem RFID (Radio Frequency Identification)-Transponder versehen. Somit kann eine Bewegung des Objekts innerhalb eines vorgesehenen Bereichs, beispielsweise eines Kastens, erfasst und gegebenenfalls eine Meldung, z.B. ein Alarmsignal, an eine Kontrolleinheit geschickt werden. Eine Ortung des Objekts über größere Strecken ist jedoch mit dieser Methode nicht möglich.

Die US 2002/0089434 A1 beschreibt ein Verfahren zum Überwachen des Standorts von Objekten, wie z.B. Fahrzeugen, aber auch Personen oder Gegenständen. Dabei werden die Objekte mit RFID-Transpondern versehen und der Laderaum von Transportfahrzeugen mit RFID-Antennen versehen, so dass das Be- und Entladen der Objekte erfasst werden kann. Zusätzlich befindet sich zur Bestimmung der geographischen Position ein Satellitennavigationssystem am Fahrzeug, so dass dessen momentane Position erfasst werden kann. Ebenso werden am Eingang von Lagerhallen RFID-Antennen angeordnet, so dass das Einlangen aber auch Abholen von Objekten mit RFID-Transpondern erfasst werden kann. Die Kommunikation zwischen Zentrale, Halle und Fahrzeugen geschieht drahtlos und berührungslos. Nachteilig bei der Satellitennavigation ist, dass eine "Sichtverbindung" zu den Navigationssatelliten erforderlich ist. Dadurch kann beispielsweise in Tunneln oder dgl. eine Ortung nicht stattfinden. Darüber hinaus ist das System relativ aufwendig.

Die US 6 744 383 B1 zeigt ein intelligentes Mautsystem, bei dem ein Fahrzeug an bestimmten Punkten entlang einer Straße identifiziert wird und Abrechnungsdaten gesammelt werden. Dabei erfolgt keine aktive Bestimmung der Position des Objekts, sondern vielmehr eine reine Identifikation des Objekts an verschiedenen diskret voneinander unterscheidbaren Standorten. Eine stetige Verfolgung eines Objekts ist mit dieser Methode nicht beabsichtigt und möglich.

Die EP 0996 105 A1 beschreibt ein System zur Verfolgung von Objekten, bei dem die zu verfolgenden Objekte mit einem Datenträger versehen werden, dessen Daten mit Hilfe eines stationären oder mobilen Schreib/Lese-Geräts erfasst werden können. Dadurch, dass ein automatischer und permanenter Austausch von Daten zwischen dem Datenträger am Objekt und dem Lesegerät stattfindet, kann die Abwesenheit des Datenträgers und somit des Objekts sofort erkannt werden. Dabei handelt es sich um eine reine Identifikation und nicht um eine Lokalisierung. Es wird nur erkannt, ob sich das Objekt im Lesebereich eines Lesegeräts befindet oder nicht, und nicht die genaue Position des Objekts ermittelt.

Die EP 1 246 094 A1 beschreibt ein Überwachungssystem für Container unter Zuhilfenahme von RFID-Readern, einem GSM-Modem und sonstigen Kommunikationsgeräten, wie Satellitenkommunikationseinheiten.

Die US 6 246 882 B1 beschreibt ein Verfahren und System der gegenständlichen Art, welches zur Verfolgung von Objekten unter Auswertung der Zellinformationen von Mobilfunknetzen dient. Die Zuordnung der geographischen Position zur Zell- und Basisstationsinformation des Funknetzes erfolgt über einen sogenannten "lookup table". Es wird jedoch nicht darauf eingegangen, woher dieser "lookup table" seine Daten bezieht.

Weiters sind Verfahren bekannt, mit welchen eine Ortung von Objekten, wie z.B. Containern, über das Mobilfunknetz vorgenommen wird. Die Ermittlung erfolgt beispielsweise im GSM (Global System for Mobile Communications)-Netz durch eine so genannte passive GSM-Ortung bzw. netzbasierte Ortung, bei der sich das Ortungsmodul in einer Funkzelle des Mobilfunk-Betreibers anmeldet und daraus der Standort ermittelt wird. Dies erfordert jedoch die Zusammenarbeit mit dem Mobilfunk-Betreiber, da von diesem die entsprechenden Daten über die Mobilfunk-Netze und darin befindlichen Basisstationen (Base Transceiver Stations BTS) geliefert werden müssen. Für die Ortung von Objekten über größere Distanzen wäre die Information sämtlicher Mobilfunkbetreiber entlang der Distanz erforderlich, was in der Praxis auf Schwierigkeiten stoßen wird.

Die Aufgabe der vorliegenden Erfindung besteht daher in der Schaffung eines oben genannten Verfahrens und Systems zur automatischen Identifikation und Ortung von Objekten, mit dem eine möglichst lückenlose Ortung über möglichst große Distanzen möglich ist. Die Implementierung des Verfahrens und Systems soll möglichst rasch, einfach und kostengünstig durchführbar sein. Nachteile des Standes der Technik sollen vermieden bzw. zumindest reduziert werden.

Weitere Aufgaben der vorliegenden Erfindung bestehen in der Schaffung einer Kennzeichnungseinheit, einer Leseeinrichtung, einer mobilen Positionsbestimmungseinrichtung und einer zentralen Einrichtung für ein oben genanntes System zur automatischen Identifikation und Ortung von Objekten.

Gelöst wird die erfindungsgemäße Aufgabe durch ein oben genanntes Verfahren, wobei die der Zell- und Basisstationsinformation des Funknetzes zugehörige geographische Position über Satellitennavigation ermittelt und an die zentrale Einrichtung und in weiterer Folge an die Ortungsdatenbank übermittelt wird. Dadurch, dass den Objekten eine eindeutige Kennung zugeordnet ist und diese zusammen mit der Zell- und Basisstationsinformation eines Funknetzes an eine zentrale Einrichtung übermittelt wird, kann aus der Zell- und Basisstationsinformation unter Zuhilfenahme der Ortungsdatenbank die geographische Position des Objekts ermittelt werden. Es ist nicht erforderlich, dass jedes zu ortende Objekt mit einer Einrichtung zur Bestimmung der geographischen Position, wie z.B. einem Satellitennavigationssystem oder dgl. ausgestattet wird. Zur Ermittlung der erforderlichen Daten für die Ortungsdatenbank muss der Transportweg zur Implementierung der Ortungsdatenbank einmal durchfahren werden, worauf die entsprechenden Daten verfügbar sind. Zum Aufbau einer Ortungsdatenbank müssen daher nur einzelne Transportfahrzeuge mit entsprechenden Einrichtungen, welche über ein Satellitennavigationssystem und entsprechende Funkempfangssysteme verfügen, ausgestattet werden. Dies verringert den Aufwand und macht das System von den Informationen von Mobilfunkbetreibern unabhängig. Bei den Satellitennavigationssystemen können sämtliche derzeit verfügbare oder auch zukünftige Systeme zum Einsatz kommen. Neben den Satellitennavigationssystemen können aber auch andere Verfahren zur Bestimmung einer geographischen Position eingesetzt werden. Unter der Voraussetzung der entsprechenden Daten in der Ortungsdatenbank können die Objekte nahezu überall geortet werden. Dabei greift das erfindungsgemäße Verfahren auf vorhandene Technologien, insbesondere die Zell- und Basisstationsinformationen eines Funknetzes, zu, wodurch der Implementierungsaufwand gering gehalten werden kann. Die zentrale Einrichtung verfügt über die notwendigen Informationen, um ein automatisches Systemmanagement einzurichten, welches den Status von Objekten überwachen, im Fehlerfall Meldungen auslösen und Bewegungsdaten archivieren kann. Dadurch wird eine zeit- und ortsunabhängige Warendisposition ermöglicht. Die zu überwachenden Objekte bzw. eine Einheit mehrerer zu überwachenden Objekte werden mit einer Kennzeichnungseinheit versehen, wodurch eine eindeutige Zuordnung der Objekte ermöglicht wird. Durch Verwendung des am jeweiligen Ort verfügbaren Funknetzes kann eine Ortung des Objekts nahezu überall erfolgen. So wird es möglich auch innerhalb von Gebäuden und Transportmitteln, wie Flugzeuge, Container, Schiffe, eine Ortung über Radiofrequenzen oder Zell- und Basisstationsinformationen durchzuführen.

Gemäß einem weiteren Merkmal der Erfindung ist vorgesehen, dass die eindeutige Kennung automatisch drahtlos an eine Leseeinrichtung übermittelt wird, sobald sich die Kennzeichnungseinheit in Reichweite der Leseeinrichtung befindet, und die eindeutige Kennung zusammen mit der Zell- und Basisstationsinformation der Leseeinrichtung an die zentrale Einrichtung übermittelt wird und über die geographische Position der Leseeinrichtung die geographische Position des an der Leseeinrichtung vorbeigeführten Objekts ermittelt wird. Im einfachsten Fall enthält die den Objekten zugeordnete mobile Kennzeichnungseinheit lediglich die eindeutige Kennung und eine entsprechende Einrichtung zur Übermittlung der Kennung an die Leseeinrichtung. Die Leseeinrichtungen werden beispielsweise an bestimmten Punkten entlang des Transportweges angeordnet und senden beim Vorbeibewegen der Objekte bzw. Kennzeichnungseinheiten an der Leseeinrichtung entsprechende Informationen an die zentrale Einrichtung. Nachdem die geographische Position der Leseeinrichtungen bekannt ist, kann zum Zeitpunkt des Vorbeiführen des Objekts an der Leseeinrichtung dessen Position exakt bestimmt werden. Bei einer entsprechend dichten Anordnung von Leseeinrichtungen kann die geographische Position der Objekte entlang der Leseeinrichtung bestimmt und zwischen den Leseeinrichtungen interpoliert werden. Grundsätzlich können die Leseeinrichtungen stationär oder mobil sein.

Anstelle der geographischen Position der Leseeinrichtung kann auch ein Identifikationsmerkmal der Leseeinrichtung an die zentrale Einrichtung übermittelt werden und über das Identifikationsmerkmal der Leseeinrichtung die geographische Position des an der Leseeinrichtung vorbeigeführten Objekts ermittelt werden. Die Ermittlung der geographischen position erfolgt dabei vorzugsweise über eine entsprechende Referenzdatenbank. Diese Variante kann insbesondere bei stationären Leseeinrichtungen zur Anwendung kommen, da in diesem Fall keine Übermittlung der jeweiligen Zell- und Basisstationsinformation der Leseeinrichtung an die zentrale Einrichtung erforderlich ist.

Die Übermittlung der eindeutigen Kennung an die Leseeinrichtung erfolgt vorzugsweise mittels Radiofrequenz. Die Kennzeichnungseinheit kann durch so genannte RFID (Radio Frequency Identification)-Transponder gebildet sein, welche eine eindeutige Kennung enthalten. Beim Vorbeifahren an einer mit einer entsprechenden Antenne ausgestatteten Leseeinrichtung wird diese eindeutige Kennung automatisch an die Leseeinrichtung übermittelt. RFID-Transponder sind in vielen Bereichen zur Kennzeichnung von Produkten erhältlich und zeichnen sich durch besonders kostengünstige Ausführung und geringe Größe aus.

Die eindeutige Kennung kann zusammen mit der Zellinformation eines Mobiltelefonnetzes an die zentrale Einrichtung übermittelt werden. Für eine lückenlose Ortung eines Objekts ist jedoch erforderlich, dass der gesamte Transportweg vom Mobiltelefonnetz abgedeckt wird. Dies ist beispielsweise bei Luftwegen oder Seewegen nicht der Fall, wo bei der gegenständlichen Erfindung jedoch auf andere zellulare Funknetze zugegriffen werden kann und die geographische Position des Objekts über die Zell- und Basisstationsinformation dieses Funknetzes ermittelt werden kann.

Die eindeutige Kennung des Objekts zusammen mit der Zell- und Basisstationsinformation oder dem Identifizierungsmerkmal der Leseeinrichtung, vorzugsweise zusammen mit einem Zeitsignal, kann auch zwischengespeichert werden und zu vorgegebenen Zeiten an die zentrale Einrichtung übermittelt werden. Dadurch ist eine Ortung in Echtzeit zwar nicht möglich, es kann jedoch der Transportweg für verschiedenste Zwecke dokumentiert und gespeichert werden.

Gemäß einem weiteren Merkmal der Erfindung ist vorgesehen, dass Parameter des Objekts oder der Umgebung des Objekts, wie z.B. die Temperatur, Luftfeuchtigkeit, Beschleunigung oder dgl. erfasst und an die zentrale Einrichtung übermittelt werden. Über die Erfassung derartiger Parameter können wichtige Informationen über das Objekt bzw. den Transport eines Objekts erhalten werden. Beispielsweise kann beim Transport empfindlicher Objekte, wie beispielsweise von Lebensmitteln aber auch Kunstgegenständen, durch Überwachung der Temperatur und Luftfeuchtigkeit oder dgl. sichergestellt werden, dass bestimmte Temperatur- oder Luftfeuchtigkeitsgrenzen nicht überschritten werden bzw. bei Überschreitung von Schwellwerten ein entsprechendes Warnsignal ausgegeben werden. Darüber hinaus kann beispielsweise mit einem Beschleunigungssensor die Bewegung des Objekts erfasst und nur im Falle der Bewegung die Übermittlung der Zell- und Basisstationsinformation an die zentrale Einrichtung eingeleitet werden. Schließlich kann durch Messung des Luftdrucks auf einen Transport des Objekts auf dem Luftweg rückgeschlossen werden und es können entsprechende Schritte, wie z.B. die Umschaltung vom Mobilfunktnetz in ein Flugfunknetz eingeleitet werden.

In der Kennzeichnungseinheit können zusätzliche Informationen über das Objekt gespeichert und auf Anforderung an die zentrale Einrichtung übermittelt werden. Diese zusätzlichen Informationen können beispielsweise die Art, das Gewicht, die Größe oder dgl. des Objekts aber auch der Ursprungsort oder der Zielort des Objekts sein.

Weiters können Datensätze von der zentralen Einrichtung an die Kennzeichnugnseinheiten oder die Leseeinrichtungen übermittelt werden. Auf diese Weise können einerseits Informationen an die Kennzeichnungseinheiten oder Leseeinrichtungen aber auch Software-Updates geschickt werden, ohne dass die entsprechenden Einrichtungen eingezogen werden müssen oder das Laden der Datensätze am Ort der Einrichtungen durchgeführt werden muss.

Die Kennung des Objekts, die Zell- und Basisstationsinformation des Funknetzes und allenfalls weitere Parameter oder Informationen über das Objekt können über das Mobiltelefonnetz, insbesondere über Kurzmitteilungen (SMS) oder nach dem GSM-, GPRS- oder UMTS-Standard aber auch über Tonwahlverfahren (DTMF) an die zentrale Einrichtung übermittelt werden. Neben diesen gängigen Kommunikationsverfahren können aber auch verschiedenste andere Verfahren zum Einsatz kommen.

Gelöst wird die erfindungsgemäße Aufgabe auch durch ein oben genanntes System zur automatischen Identifikation und Ortung von Objekten, bei dem eine mobile Einrichtung zur Bestimmung der geographischen Position vorgesehen ist, mit Mitteln zur Übertragung der geographischen Position mit der jeweiligen Zell- und Basisstationsinformation des Funknetzes an die zentrale Einrichtung. Durch eine derartige mobile Einrichtung kann ein gewünschter Transportweg abgefahren werden, und auf diese Weise die zugehörigen Basisdaten für die Ortungsdatenbank gesammelt werden. Die mobilen Einrichtungen sammeln hierbei eine Menge von Aufnahmepunkten gekennzeichnet durch eine Geoposition und dazugehörigen Zell- und Basistationsinformationen. Aus dieser Menge von Aufnahmepunkten werden über einen geeigneten Ortungsalgorithmus die Zell- und Basisstations-spezifischen Ortungsinformationen wie z.B. Zellschwerpunkt, -ausmaße sowie -begrenzungspunkte ermittelt und in der Ortungsdatenbank abgelegt. Für die Speicherung der entsprechenden Daten der Ortungsdatenbank können für die gewünschten Transportwege entsprechend viele mobile Einrichtungen ausgegeben werden, wodurch in relativ kurzer Zeit die notwendigen Daten für die gewünschten Transportwege erhalten werden können. Das System zeichnet sich durch relativ geringen Installationsaufwand aus und erlaubt eine Ortung von Objekten unter Verwendung vorhandener Funktnetze.

Gemäß einem weiteren Merkmal der Erfindung ist zumindest eine Leseeinrichtung mit Mitteln zum Empfang der eindeutigen Kennung und Mitteln zum Übertragen der eindeutigen Kennung zusammen mit der Zell- und Basisstationsinformation des Funknetzes oder eines eindeutigen Identifizierungsmerkmals an die zentrale Einrichtung vorgesehen. Sobald ein mit einer Kennzeichnungseinheit versehenes Objekt an der Leseeinrichtung vorbeibewegt wird, empfängt die Leseeinrichtung vorzugsweise automatisch die in der Kennzeichnungseinheit vorhandene eindeutige Kennung und überträgt diese zusammen mit der Zell- und Basisstationsinformation des Funknetzes oder eines eindeutigen Identifizierungsmerkmals der Leseeinrichtung an die zentrale Einrichtung. Somit kann die geographische Position des Objekts zum Zeitpunkt des Vorbeibewegens an einer Leseeinrichtung erfasst werden. Je genauer die Ortung des Objekts sein soll desto mehr Leseeinrichtungen müssen entlang des Transportweges installiert werden.

Die Mittel zum Empfang der eindeutigen Kennung werden vorzugsweise durch ein Radiofrequenzidentifikations (RFID)-System gebildet. Dieses System ist besonders kostengünstig und weist geringe Baugröße auf. RFID-Transponder zur Kennzeichnung von Objekten können rein passiv aber auch aktiv mit einer integrierten Spannungsversorgung aufgebaut sein. Dadurch wird auch die Reichweite, über welche das Detektieren der Kennzeichnungseinheit durch die Leseeinrichtung möglich ist, bestimmt.

Die Kennzeichnungseinheit kann auch ein Mobiltelefonmodul zur Übertragung der Zell- und Basisstationsinformation eines Mobiltelefonnetzes an die zentrale Einrichtung aufweisen. Dadurch ist eine lückenlose Ortung des Objekts innerhalb des Mobiltelefonnetzes möglich. Wenn zusätzlich andere Sendeeinrichtungen zur Übertragung der Zell- und Basisstationsinformationen anderer Funknetze angeordnet sind, kann auch außerhalb der Mobiltelefonnetze, beispielsweise beim Transport von Objekten auf dem Seeweg, unter Verwendung dort üblicher, zellularer Funknetze eine genaue Ortung des Objekts erfolgen.

Wie bereits oben erwähnt, können zusätzliche Informationen für weitere Anwendungen dadurch erhalten werden, wenn zumindest ein Sensor zur Erfassung von Parametern des Objekts oder der Umgebung des Objekts, beispielsweise ein Temperatursensor, Feuchtigkeitssensor, Beschleunigungssensor oder dgl. in der Kennzeichnungseinheit vorgesehen ist. Da verschiedene Sensoren besonders preisgünstig und in geringer Größe erhältlich sind, können auch kleine Objekte mit entsprechenden Sensoren versehen werden.

Die Einrichtung zur Bestimmung der geographischen Position kann ein Satellitennavigationssystem beinhalten .

Die Kennzeichnungseinheiten können Speicher für zusätzliche Informationen über das Objekt aufweisen. Dadurch kann neben der Ortung eines Objekts auch wichtige Information über das Objekt selbst bzw. den Absender oder Empfänger erhalten werden.

Um eine Abfrage der gewünschten Daten über ein Objekt von verschiedenen Stellen zuzulassen, weist die zentrale Einrichtung vorzugsweise eine Verbindung zu einem Datennetz, insbesondere dem Internet, auf. Somit kann unter der Vorraussetzung der notwendigen Zugangsberechtigungen theoretisch von jedem Computer oder Endgerät mit Internetverbindung Information über den Ort des Objekts erhalten werden.

Gelöst wird die erfindungsgemäße Aufgabe auch durch eine Kennzeichnungseinheit für ein oben genanntes System zur automatischen Identifikation und Ortung von Objekten mit einem Speicher zum Speichern einer eindeutigen Kennung und mit Mitteln zur drahtlosen Übertragung zumindest der eindeutigen Kennung, mit einem Gehäuse, enthaltend den Speicher zum Speichern der eindeutigen Kennung, die Übertragungsmittel und eine Kontrolleinrichtung. Eine derartig aufgebaute Kennzeichnungseinheit kann relativ kostengünstig und in geringer Baugröße aufgebaut werden, wodurch viele Objekte damit versehen werden können.

In der Kennzeichnungseinheit kann eine Spannungsversorgung, insbesondere in Form von Batterien, vorgesehen sein.

Weiters kann zumindest ein Sensor, beispielsweise ein Temperatursensor, Feuchtigkeitssensor, Beschleunigungssensor oder dgl. vorgesehen sein.

Über eine optische Anzeigeeinrichtung können beispielsweise Betriebszustände der Kennzeichnungseinheit dargestellt werden. Die optische Anzeigeeinrichtung kann durch einfache Lichtelemente, wie Leuchtdioden aber auch durch Anzeigen bis hin zu kleinen Bildschirmen, gebildet sein.

Zur Ausgabe von Warnsignalen kann auch eine akustische Ausgabeeinrichtung vorgesehen sein. Beispielsweise kann beim Vorbeiführen der Kennzeichnungseinheit an einer Leseeinrichtung ein akustisches Bestätigungssignal ausgegeben werden.

Mit Hilfe eines weiteren Speichers in der Kennzeichnungseinheit kann zusätzliche Information über das Objekt abgelegt und diesem zugeordnet werden.

Zum Auslesen der Daten aber auch zum Programmieren der Kennzeichnungseinheit kann eine Schnittstelle vorgesehen sein. Dabei kann es sich um eine leitungsgebundene aber auch um eine optische Schnittstelle, beispielsweise eine Infrarot-Schnittstelle handeln.

Wenn in der Kennzeichnungseinheit ein Mobiltelefonmodul vorgesehen ist, kann über die entsprechende Zell- und Basisstationsinformation des Mobiltelefonnetzes die geographische Position des mit der Kennzeichnungseinheit versehenen Objekts nahezu lückenlos ermittelt werden.

Weitere Anwendungsmöglichkeiten können dadurch erzielt werden, dass das Gehäuse flüssigkeits- und/oder gasdicht ausgebildet ist.

Um eine Befestigung der Kennzeichnungseinheit am Objekt oder an einer Menge von Objekten zu ermöglichen, sind am Gehäuse der Kennzeichnungseinheit Befestigungsmittel angeordnet. Diese können durch doppelseitige Klebestreifen, Bänder, Klemmen oder Ähnlichem gebildet sein.

Gelöst wird die erfindungsgemäße Aufgabe auch durch eine Leseeinrichtung für ein oben genanntes System mit einer Einrichtung zur Kommunikation mit den Übertragungsmitteln der Kennzeichnungseinheit und einem Funkmodul, wobei die Kommunikationseinrichtung durch eine Datenübertragungseinrichtung, beispielsweise einen Mobilfunkempfänger, oder einen Radiofrequenz-Empfänger gebildet ist. Beim Vorbeiführen einer Kennzeichnungseinheit mit einem entsprechenden RFID-Transponder wird die eindeutige Kennung vom Radiofrequenz-Empfänger der Leseeinrichtung erfasst und kann dann von der Leseeinrichtung weiter zusammen mit der Zell- und Basisstationsinformation des Funknetzes oder einem eindeutigen Identifizierungsmerkmal zur zentralen Einrichtung übermittelt werden.

Vorzugsweise ist in der Leseeinrichtung ein Speicher vorgesehen. In diesen können beim Vorbeibewegen von Objekten die eindeutige Kennung zusammen mit der Zeit abgelegt und zu bestimmten Zeiten oder auf Anforderung zusammen mit der Zell- und Basisstationsinformation des Funknetzes oder einem eindeutigen Identifizierungsmerkmal an die zentrale Einrichtung übermittelt werden.

Um von externer Versorgung unabhängig zu sein, kann die Leseeinrichtung eine interne, vorzugsweise durch eine Batterie gebildete, Spannungsversorgung aufweisen.

Weiters kann es von Vorteil sein, dass zumindest ein Sensor, beispielsweise ein Temperatursensor, Feuchtigkeitssensor, Beschleunigungssensor oder dgl. vorgesehen ist.

Über eine optische Anzeigeeinrichtung an der Leseeinrichtung können verschiedene Betriebszustände oder auch Daten wiedergegeben werden.

Eine akustische Ausgabeeinrichtung an der Leseeinrichtung kann zur Abgabe von Warnsignalen oder Bestätigungssignalen dienen.

Für zusätzliche Informationen kann ein weiterer Speicher in der Leseeinrichtung vorgesehen sein.

Zum Auslesen von Daten aber auch Einspielen von Software-Updates oder dgl. kann eine Schnittstelle an der Leseeinrichtung angeordnet sein.

Gelöst wird die erfindungsgemäße Aufgabe auch durch eine mobile Positionsbestimmungseinrichtung für ein oben genanntes Ortungssystem mit Mitteln zur Bestimmung der geographischen Position, Mitteln zur Übertragung der geographischen Position mit der jeweiligen Zell- und Basisstationsinformation des Funknetzes, wobei die Mittel zur Bestimmung der geographischen Position durch ein Satellitennavigationssystem gebildet sind. Beim Durchlaufen eines Weges können daher sowohl die vom Satellitennavigationssystem erhaltenen geographischen Daten als auch die jeweiligen Zell- und Basisstationsinformationen des Funknetzes, insbesondere die Zellinformation des Mobilfunknetzes, aufgenommen werden und in die Ortungsdatenbank eingespielt werden. Somit sind die für die Bestimmung der geographischen Position aus der Zell- und Basisstationsinformation notwendigen Daten für den entsprechenden Weg abgelegt. Die mobile Positionsbestimmungseinrichtung braucht nur beim Festlegen neuer Transportwege eingesetzt werden und braucht später bei der Bestimmung der Ortung des Objekts nicht mehr verwendet werden.

Gelöst wird die erfindungsgemäße Aufgabe auch durch eine zentrale Einrichtung für ein oben genanntes Ortungssystem mit einer Rechnereinheit und einem Funkempfänger zur Kommunikation mit der Kennzeichnungseinheit und der allfälligen Leseeinrichtung.

Um einen Zugang zu den Positionsdaten des georteten Objekts von verschiedensten Stellen aus zu ermöglichen, weist die zentrale Einrichtung vorzugsweise eine Verbindung zu einem Datennetz, insbesondere dem Internet, auf.

Die vorliegende Erfindung wird anhand der beigefügten Zeichnungen näher erläutert. Darin zeigen:
Fig. 1 ein Blockschaltbild zur Veranschaulichung des erfindungsgemäßen Verfahrens zur Ortung eines Objekts;
Fig. 2 eine Ausführungsform einer Kennzeichnungseinheit;
Fig. 3 das Blockschaltbild einer Ausführungsform einer Leseeinrichtung;
Fig. 4 das Blockschaltbild einer Ausführungsform einer mobilen Positionsbestimmungseinrichtung;
Fig. 5 das Blockschaltbild einer Ausführungsform einer zentralen Einrichtung; und
Fig. 6 ein Flussdiagramm zur Veranschaulichung des erfindungsgemäßen Verfahrens zur Sendungsverfolgung;

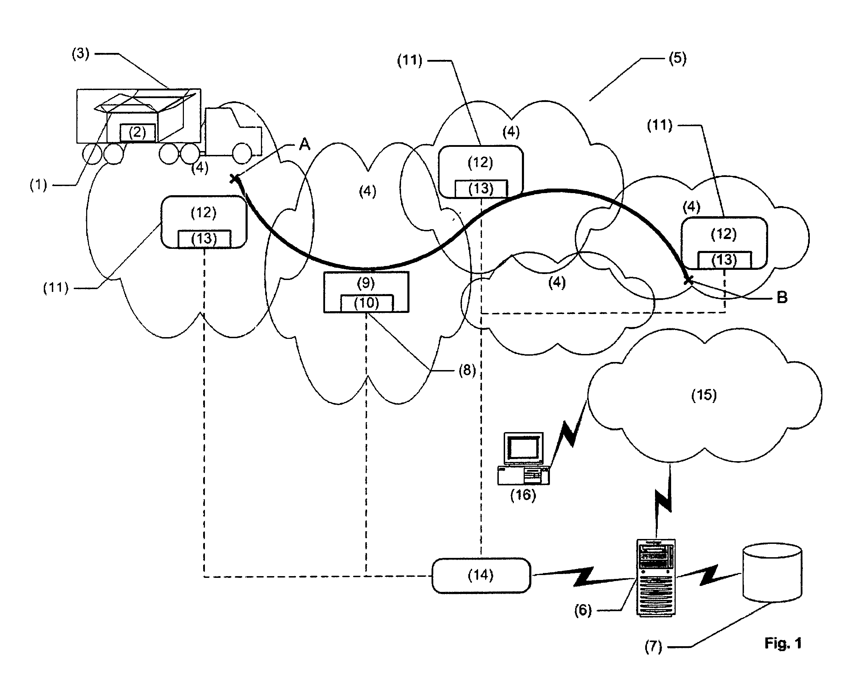

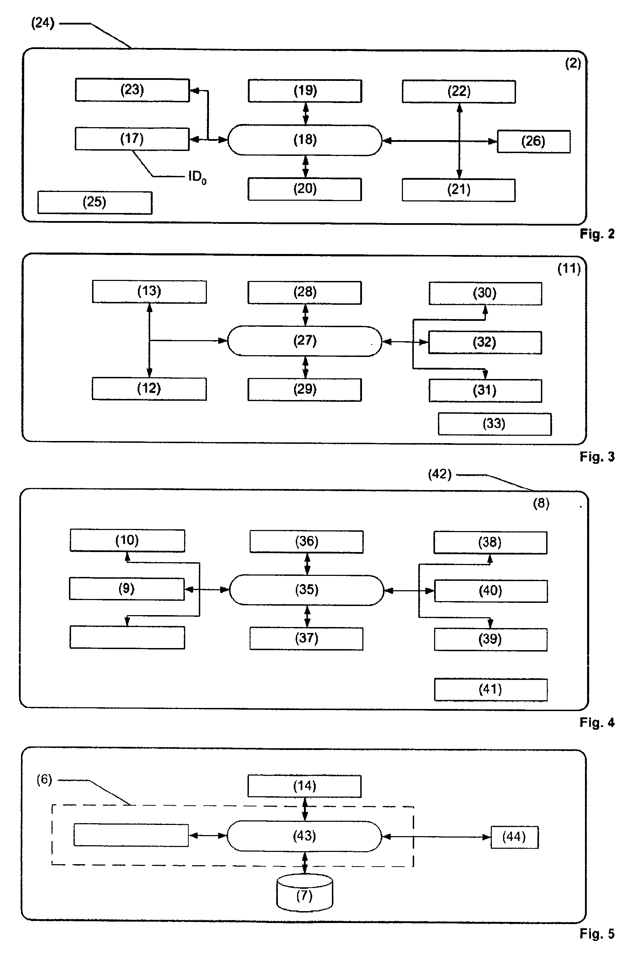

Fig. 1 zeigt ein Blockschaltbild zur Veranschaulichung des erfindungsgemäßen Verfahrens zur automatischen Identifikation und Ortung von Objekten 1 im Falle des Transports von Objekten 1 entlang eines Transportweges A-B. Dem Objekt 1 wird eine eindeutige Kennung ID_{O} zugeordnet, indem eine Kennzeichnungseinheit 2 am Objekt 1 befestigt oder dem Objekt 1 beigepackt wird. Die Kennzeichnungseinheit 2 wird in Fig. 2 näher erläutert. Während ein Fahrzeug 3 mit dem Objekt 1 entlang dem Transportweg A-B bewegt wird, durchläuft es Zellen 4 eines Funknetzes 5, insbesondere eines Mobiltelefonnetzes. Über die Zellinformation des Funknetzes 5 kann die geographische Position eines darin befindlichen Funkempfängers, insbesondere Mobiltelefons, bestimmt werden. Die gegenständliche Erfindung macht sich das Funknetz 5 bzw. Mobiltelefonnetz zunutze, indem die eindeutige Kennung ID_{O} des Objekts 1 zusammen mit der jeweiligen Zell- und Basisstationsinformation des Funknetzes 5 an eine zentrale Einrichtung 6 bzw. eine entsprechende Empfangseinrichtung 14 übermittelt wird. Weiters wird die der Zell- und Basisstationsinformation des Funknetzes 5 zugehörige geographische Position ermittelt und in einer mit der zentralen Einrichtung 6 verbundenen Ortungsdatenbank 7 gespeichert. Die Ermittlung der der Zell- und Basisstationsinformation des Funknetzes 5 zugehörigen geographischen Position kann auf verschiedene Weise erfolgen. Einerseits kann der Betreiber des Funknetzes 5 diese Information zur Verfügung stellen, was in vielen Fällen jedoch nicht oder nicht einfach möglich sein wird. Daher wird beim erfindungsgemäßen Verfahren die geographische Position in den jeweiligen Zellen 4 des Funknetzes 5 derart ermittelt, dass eine mobile Positionsbestimmungseinrichtung 8 entlang dem Transportweg A-B geführt wird. Die mobile Positionsbestimmungseinrichtung 8 beinhaltet eine Einrichtung 9 zur Bestimmung der geographischen Position, insbesondere ein Satellitennavigationssystem, und Mittel 10 zur Übertragung der geographischen Position mit der jeweiligen Zell- und Basisstationsinformation des Funknetzes 5 an die zentrale Einrichtung 6. Die mobile Positionsbestimmungseinrichtung 8 kann dem Objekt 1 oder einem Fahrzeug 3 zugeordnet werden oder getrennt davon entlang dem Transportweg A-B bewegt werden. Die Mittel 10 zur Übertragung der geographischen Position mit der jeweiligen Zell- und Basisstationsinformation des Funknetzes 5 bestehen aus einem Empfänger für das jeweilige Funknetz 5 und einem entsprechenden Sender zur Übermittlung der Daten an die zentrale Einrichtung 6. Wurde die Ortungsdatenbank 7 mit den erforderlichen Daten über die Zell- und Basisstationsinformation des Funknetzes 5 und die zugehörige geographische Position geladen, kann nunmehr aus der Zell- und Basisstationsinformation allein die geographische Position verlässlich ermittelt werden. Die Kennzeichnungseinheit 2 kann ein entsprechendes Funkmodul 11 enthalten, das die Zell- und Basisstationsinformation des Funknetzes 5 aufnimmt und an die zentrale Einrichtung 6 weitergibt (s. Fig. 2). Ebenso können entlang dem Transportweg A-B Leseeinrichtungen 11 angeordnet sind, welche über Mittel 12 zum Empfang der eindeutigen Kennung ID_{O} der Kennzeichnungseinheit 2 verfügen. Weiters verfügen die Leseeinrichtungen 11 über Mittel 13 zum Übertragen der eindeutigen Kennung ID_{O} zusammen mit der Zell- und Basisstationsinformation des Funknetzes 5 oder eines eindeutigen Identifizierungsmerkmals ID_{L} an die zentrale Einrichtung 6. Fährt nun das Objekt 1 mit der Kennzeichnungseinheit 2 an der Leseeinrichtung 11 vorbei, wird die eindeutige Kennung ID_{O} automatisch drahtlos von der Kennzeichnungseinheit 2 an die Leseeinrichtung 11 übermittelt. Die eindeutige Kennung ID_{O} zusammen mit der Zell- und Basisstationsinformation der Leseeinrichtung 11, welche beispielsweise mit einem darin befindlichen Mobiltelefon-Empfänger festgestellt wird, wird dann an die zentrale Einrichtung 6 bzw. die Einrichtung 14 zum Empfang der Zell- und Basisstationsinformationen übermittelt. Aufgrund der Zell- und Basisstationsinformationen oder auch einer eindeutigen Identifikation ID_{L} der Leseeinrichtung 11 kann die geographische Position des an der Leseeinrichtung vorbeigeführten Objekts 1 festgestellt werden. Je nach Anzahl der Leseeinrichtungen 11 entlang des Transportweges A-B kann das Objekt 1 mehr oder weniger genau entlang des Transportweges A-B geortet werden. Um einen Zugang zu den jeweiligen Ortungsdaten des Objekts 1 von verschiedenen Stellen aus zu ermöglichen, ist die zentrale Einrichtung 6 und die Ortungsdatenbank 7 vorzugsweise mit einem Datennetz, insbesondere dem Internet 15, verbunden. Dadurch kann grundsätzlich von jedem Computer 16 mit Internet-Zugang der Ort eines Objekts 1 ermittelt werden. Abgesehen von der beschriebenen Verfolgung von Objekten während des Transports, eignet sich das erfindungsgemäße Verfahren bzw. System auch besonders für die Diebstahlsicherung für Kraftfahrzeuge, die spezielle Überwachung von Transporten von Gefahrengut und Wertgegenständen sowie zum Personenschutz und zur Personenüberwachung aber auch zur Überwachung bzw. Ortung von Tieren.

Die Übertragung der eindeutigen Kennung ID_{O} des Objekts 1 der Zell- und Basisstationsinformation des Funknetzes 5 und allenfalls weiterer Parameter oder Informationen über das Objekt 1 kann über das Mobiltelefonnetz, insbesondere nach dem GSM (Global System for Mobile Communication), GPRS (General Packet Radio Service) oder UMTS (Universal Mobile Telecommunication System) Standard an die zentrale Einrichtung 6 bzw. die Empfangseinheit 14 übermittelt werden. Ebenso kan die Übermittlung über Kurzmitteilungen (SMS) oder auch eine Übertragung über Tonwahlverfahren (Dual Tone Multiplexed Frequency DTMF) an die zentrale Einrichtung 6 erfolgen.

Im Folgenden werden die einzelnen Module des erfindungsgemäßen Systems zur automatischen Identifikation und Ortung von Objekten 1 näher erläutert.

Fig. 2 zeigt ein Blockschaltbild einer Kennzeichnungseinheit 2 umfassend ein Mittel 17 zum Speichern einer eindeutigen Kennung ID_{O}, welches beispielsweise durch einen Radiofrequenzidentifikationstransponder (RFID - Radio Frequency Identification) gebildet sein kann. Der RFID-Transponder ist mit einem Kontrollmodul 18, insbesondere einem Mikroprozessor, verbunden. Das Kontrollmodul 18 ist mit einem Datenspeicher 19 und einer externen Schnittstelle 20 verbunden. Weiters können Anzeigeelemente 21 in der Kennzeichnungseinheit 2 angeordnet sein, um Betriebszustände oder auch Daten des Datenspreichers 19 anzuzeigen. Die Kennzeichnungseinheit 2 wird am Objekt 1 befestigt oder diesem Objekt 1 oder einer Menge von Objekten 1 beigepackt. Schließlich können auch Sensoren 22 in der mobilen Kennzeichnungseinheit 2 angeordnet sein, über die bestimmte Parameter, wie z.B. Temperatur, Luftfeuchtigkeit, Beschleunigung oder dgl., erfasst werden können und in der Folge an die zentrale Einrichtung 6 weitergeleitet werden können. Neben der Erfassung der Umgebungsbedingungen für das Objekt 1 kann mit Hilfe der Sensoren 22 auch festgestellt werden, wann das Objekt 1 bewegt wird, oder ob das Objekt 1 auf dem Luftweg transportiert wird, was über den Luftdruck ermittelbar wäre. Zusätzlich kann ein Kommunikationsmodul 23, beispielsweise Mobiltelefonmodul, in der mobilen Kennzeichnungseinheit 2 angeordnet sein, über welches die Zell- und Basisstationsinformation des Funknetzes 5 bzw. Mobiltelefonnetzes an die zentrale Einrichtung 6 übertragen werden kann. Sämtliche Komponenten sind in einem Gehäuse 24 untergebracht und von einer gemeinsamen Spannungsversorgung 25 mit elektrischer Energie versorgt. Das Gehäuse 24 kann flüssigkeits- und/oder gasdicht ausgebildet sein und Befestigungsmittel aufweisen, welche eine Anordnung der Kennzeichnungseinheit 2 am Objekt 1 erleichtert. Neben den optischen Anzeigeeinrichtungen 21 kann auch eine akustische Ausgabeeinrichtung 26 angeordnet sein.

Fig. 3 zeigt ein Blockschaltbild einer Ausführungsform einer Leseeinrichtung 11 umfassend eine Einrichtung 12 zur Kommunikation mit den Übertragungsmitteln 17 der Kennzeichnungseinheit 2 und einem Kommunikationsmodul 13, beispielsweise einem Mobiltelefonmodul. Die Kommunikationseinrichtung 12 ist insbesondere durch einen Radiofrequenz-Empfänger gebildet. Die Kommunikationseinrichtung 12 und das Kommunikationsmodul 13 sind mit einem Kontrollmodul 27 verbunden, welches vorzugsweise durch einen Mikroprozessor gebildet ist. Mit dem Kontrollmodul 27 können ein Speicher 28, eine externe Schnittstelle 29, Sensoren 30, eine Anzeigeeinrichtung 31, eine akustische Ausgabeeinrichtung 33 verbunden sein. Die gesamten Komponenten werden vorzugsweise von einer internen Spannungsversorgung 33 mit elektrischer Energie versorgt und von einem gemeinsamen Gehäuse 34 umgeben.

Fig. 4 zeigt ein Blockschaltbild einer Ausführungsform einer mobilen Positionsbestimmungseinrichtung 8 mit Mitteln 10 zur Übertragung der geographischen Position mit der jeweiligen Zell- und Basisstationsinformation des Funknetzes 5 an die zentrale Einrichtung 6. Zu diesem Zweck ist ein Satellitennavigationssystem 9 angeordnet und so wie das Übertragungsmittel 10 mit einer Kontrolleinrichtung 35 verbunden. So wie bei der Kennzeichnungseinheit 2 (Fig. 2) oder Leseeinrichtung 11 (Fig. 3) kann die Kontrolleinrichtung 35, welche durch einen Mikroprozessor gebildet ist, mit einem Speicher 36 einer externen Schnittstelle 37, Sensoren 38, einer optischen Anzeigeeinrichtung 39 und einer akustischen Ausgabeeinrichtung 40 verbunden sein. Eine interne Spannungsversorgung 41 versorgt die einzelnen Komponenten mit elektrischer Energie. Sämtliche Komponenten sind vorzugsweise in einem gemeinsamen Gehäuse 42 angeordnet. Die mobile Positionsbestimmungseinrichtung 8 dient zum Aufbau der Ortungsdatenbank 7 entlang bestimmter Transportwege.

Fig. 5 zeigt ein Blockschaltbild einer zentralen Einrichtung 6 umfassend eine Recheneinheit 43, welche mit der Ortungsdatenbank 7 und einem Kommunikationsmodul 14 verbunden ist. Um einen Anschluss an ein Datennetz, insbesondere das Internet 15, zu ermöglichen, ist die Recheneinheit 43 vorzugsweise mit einer entsprechenden Verbindung 44 ausgestattet.

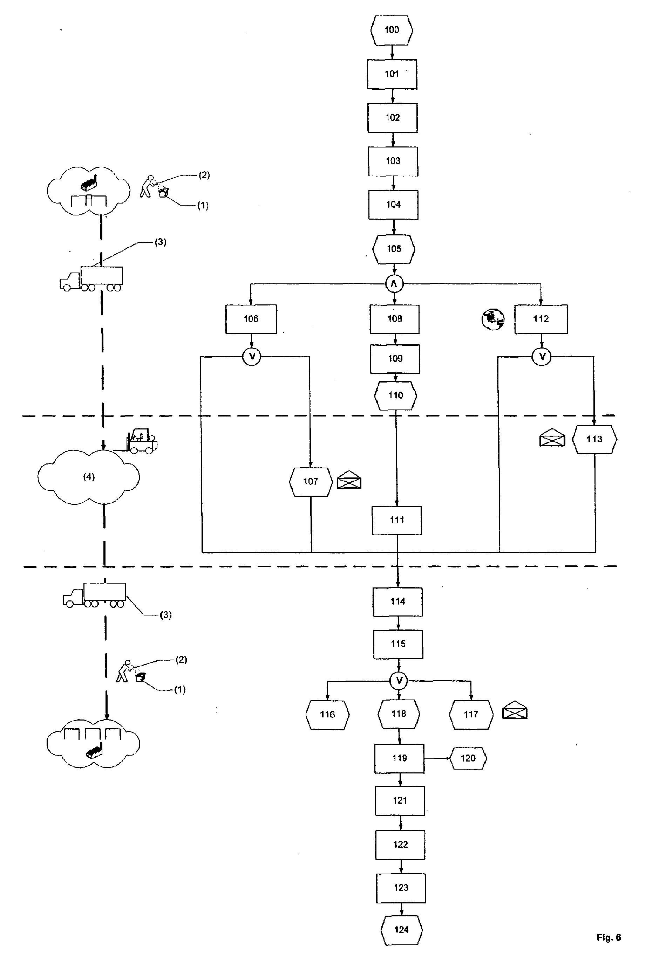

Fig. 6 zeigt ein Blockschaltbild und Flussdiagramm einer Anwendung des erfindungsgemäßen Verfahrens zur automatischen Identifikation und Ortung von Objekten 1 zur Sendungsverfolgung. Gemäß Block 100 ist eine Bestellung in einem Unternehmen eingetroffen. Gemäß Block 101 wird die Ware kommisioniert und gemäß Block 102 die mobile Kennzeichnungseinheit 2 dem Objekt 1 beigepackt. Entsprechend Block 103 wird die mobile Kennzeichnungseinheit 2 bzw. die eindeutige Identifikation ID_{O} mit der jeweiligen Ware verknüpft. Entsprechend Block 104 wird die mobile Kennzeichnungseinheit 2 konfiguriert, so dass die Ware entsprechend Block 105 versandbereit ist. Wird beispielsweise die Temperatur des Objekts 1 mit Hilfe entsprechender Sensoren überwacht (Block 106) kann eine automatische Alarmierung, beispielsweise via SMS erfolgen, wenn die Temperatur einen bestimmten Grenzwert überschreitet (107). Für den Transport wird die Ware gemäß Block 108 verladen und an den Empfänger ein Anliefer-Aviso (109) übermittelt. Nach dem Verladen der Ware wird der Status, dass die Ware verladen ist, dem Objekt zugeordnet (Block 110). Somit kann der Transport gemäß Block 111 durchgeführt werden. Parallel dazu kann der Status der Sendung überwacht werden (Block 112) und im Falle einer Verspätung eine entsprechende Alarmmeldung, beispielsweise via SMS (Block 113), abgegeben werden. Am Zielort eingetroffen wird die Ware entladen (114) und einer Wareneingangskontrolle unterzogen (Block 115). Sofern bei der Wareneingangskontrolle ermittelt wird, dass der Zustellort falsch ist (Block 116) oder die Ware nicht komplett ist (Block 117) können entsprechende Meldungen, beispielsweise via SMS, abgeschickt werden. Andernfalls wird die Ware gemäß Block 118 entladen und beispielsweise der Temperaturverlauf aus dem Speicher der mobilen Kennzeichnungseinheit 2 ausgelesen (Block 119) und die Temperaturmessung deaktiviert (120). Sodann wird entsprechend Block 121 die Ware eingelagert und die mobile Kennzeichnungseinheit 2 vom Objekt 1 entfernt (Block 122). Schließlich wird gemäß Block 123 die mobile Kennzeichnungseinheit 2 wieder an die Zentrale rückgeführt bzw. anderwärtig eingesetzt und gemäß Block 124 die Meldung abgegeben bzw. der Status eingestellt, dass die Bestellung am Zielort eingetroffen ist.

Das erfindungsgemäße Verfahren zur automatischen Identifikation und Ortung von Objekten 1 ist vielfältig einsetzbar. Die beschriebenen Beispiele zeigen nur einen kleinen möglichen Einsatzbereich.

## Patentansprüche

1. Verfahren zur automatischen Identifikation und Ortung von Objekten (1), insbesondere während des Transports, wobei den Objekten (1) eine eine eindeutige Kennung (ID_{O}) enthaltende mobile Kennzeichnungseinheit (2) zugeordnet wird, und die eindeutige Kennung (ID_{O}) zusammen mit der jeweiligen Zell- und Basisstationsinformation eines Funknetzes (5) an eine zentrale Einrichtung (6) übermittelt wird, wobei die der Zell- und Basisstationsinformation des Funknetzes (5) zugehörige geographische Position ermittelt und in einer mit der zentralen Einrichtung (6) verbundenen Ortungsdatenbank (7) gespeichert wird, und die geographische Position des Objekts (1) über die übermittelte Zell- und Basisstationsinformation aus der Ortungsdatenbank (7) ermittelt wird, **dadurch gekennzeichnet, dass** die der Zell- und Basisstationsinformation des Funknetzes (5) zugehörige geographische Position über Satellitennavigation ermittelt und an die zentrale Einrichtung (6) und in weiterer Folge an die Ortungsdatenbank (7) übermittelt wird.

2. Verfahren nach Anspruch 1, dass die eindeutige Kennung (ID_{O}) automatisch drahtlos an eine Leseeinrichtung (11) übermittelt wird, sobald sich die Kennzeichnungseinheit (2) in Reichweite der Leseeinrichtung (11) befindet, und die eindeutige Kennung (ID_{O}) zusammen mit der Zell- und Basisstationsinformation der Leseeinrichtung (11) an die zentrale Einrichtung (6) übermittelt wird, und über die geographische Position der Leseeinrichtung (11) die geographische Position des an der Leseeinrichtung (11) vorbeigeführten Objekts (1) ermittelt wird.

3. Verfahren nach Anspruch 1, dass die eindeutige Kennung (ID_{O}) automatisch drahtlos an eine Leseeinrichtung (11) übermittelt wird, sobald sich die Kennzeichnungseinheit (2) in Reichweite der Leseeinrichtung (11) befindet, und die eindeutige Kennung (ID_{O}) zusammen mit einem eindeutigen Identifikationsmerkmal (ID_{L}) der Leseeinrichtung (11) an die zentrale Einrichtung (6) übermittelt wird, und über das Identifikationsmerkmal (ID_{L}) der Leseeinrichtung (11) die geographische Position des an der Leseeinrichtung (11) vorbeigeführten Objekts (1) ermittelt wird.

4. Verfahren nach Anspruch 2 oder 3, **dadurch gekennzeichnet, dass** die eindeutige Kennung (ID_{O}) mittels Radiofrequenz an die Leseeinrichtung (11) übermittelt wird.

5. Verfahren nach einem der Ansprüche 1 bis 4, **dadurch gekennzeichnet, dass** die eindeutige Kennung (ID_{O}) zusammen mit der Zellinformation eines Mobiltelefonnetzes an die zentrale Einrichtung (6) übermittelt wird.

6. Verfahren nach einem der Ansprüche 2 bis 5, **dadurch gekennzeichnet, dass** die eindeutige Kennung (ID_{O}) des Objekts (1) zusammen mit der Zell- und Basisstationsinformation oder dem Identifizierungsmerkmal (ID_{L}) der Leseeinrichtung (11), vorzugsweise zusammen mit einem Zeitsignal, zwischengespeichert wird und zu vorgegebenen Zeiten oder auf Anforderung an die zentrale Einrichtung (6) übermittelt wird.

7. Verfahren nach einem der Ansprüche 1 bis 6, **dadurch gekennzeichnet, dass** Parameter des Objekts (1) oder der Umgebung des Objekts (1), wie zum Beispiel die Temperatur, Luftfeuchtigkeit, Beschleunigung od. dgl. erfasst und an die zentrale Einrichtung (6) übermittelt werden.

8. Verfahren nach einem der Ansprüche 1 bis 7, **dadurch gekennzeichnet, dass** in der Kennzeichnungseinheit (2) zusätzliche Informationen über das Objekt (1) gespeichert und auf Anforderung an die zentrale Einrichtung (6) übermittelt werden.

9. Verfahren nach einem der Ansprüche 1 bis 8, **dadurch gekennzeichnet, dass** Datensätze von der zentralen Einrichtung (6) an die Kennzeichnungseinheiten (2) oder die Leseeinrichtungen (11) übermittelt werden.

10. Verfahren nach einem der Ansprüche 1 bis 9, **dadurch gekennzeichnet, dass** die Kennung (ID_{O}) des Objekts (1), die Zell- und Basisstationsinformation des Funknetzes (5)und allenfalls weitere Parameter oder Informationen über das Objekt (1) über Kurzmitteilungen (SMS) an die zentrale Einrichtung (6) übermittelt werden.

11. Verfahren nach einem der Ansprüche 1 bis 10, **dadurch gekennzeichnet, dass** die Kennung (ID_{O}) des Objekts (1), die Zell- und Basisstationsinformation des Funknetzes (5)und allenfalls weitere Parameter oder Informationen über das Objekt (1) über das Mobiltelefonnetz, insbesondere nach dem GSM (Global System for Mobile Communication), GPRS (General Packet Radio Service), oder UMTS (Universal Mobile Telecommunications System) Standard an die zentrale Einrichtung (6) übermittelt werden.

12. Verfahren nach einem der Ansprüche 1 bis 11, **dadurch gekennzeichnet, dass** die Kennung (ID_{O}) des Objekts (1), die Zell- und Basisstationsinformation des Funknetzes (5), und allenfalls weitere Parameter oder Informationen über das Objekt (1) über Tonwahlverfahren (Dual Tone Multiplexed Frequency DTMF) an die zentrale Einrichtung (6) übermittelt werden.

13. System zur automatischen Identifikation und Ortung von Objekten (1), insbesondere während des Transports, mit Kennzeichnungseinheiten (2), welche den Objekten (1) eine eindeutige Kennung (ID_{O}) zuordnen, welche Kennzeichnungseinheiten (2) Mittel (17) zur drahtlosen Übertragung zumindest der eindeutigen Kennung (ID_{O}) aufweisen, weiters mit zumindest einer Einrichtung zur Übertragung der Zell- und Basisstationsinformation eines Funknetzes (5) an eine zentrale Einrichtung (6), wobei die zentrale Einrichtung (6) mit einer Ortungsdatenbank (7) verbunden ist, welche mit einer Einrichtung (14) zum Empfang von Zell- und Basisstationsinformationen von Funknetzen (5) und den zugehörigen geographischen Positionen verbunden ist, sodass die geographische Position des Objekts (1) über die übermittelte Zell- und Basisstationsinformation aus der Ortungsdatenbank (7) über entsprechende Algorithmen ermittelbar ist, **dadurch gekennzeichnet, dass** eine mobile Einrichtung (8) zur Bestimmung der geographischen Position vorgesehen ist, mit Mitteln (10) zur Übertragung der geographischen Position mit der jeweiligen Zell- und Basisstationsinformation des Funknetzes (5) an die zentrale Einrichtung (6).

14. System nach Anspruch 13, **dadurch gekennzeichnet, dass** zumindest eine Leseeinrichtung (11) mit Mitteln (12) zum Empfang der eindeutigen Kennung (ID_{O}) und mit Mitteln (13) zum Übertragen der eindeutigen Kennung (ID_{O}) zusammen mit der Zell- und Basisstationsinformation des Funknetzes (5) oder eines eindeutigen Identifizierungsmerkmals (ID_{L}) an die zentrale Einrichtung (6) vorgesehen ist.

15. System nach Anspruch 14, **dadurch gekennzeichnet, dass** das Mittel zum Empfang der eindeutigen Kennung (ID_{O}) durch ein Radiofrequenzidentifikations (RFID)-System gebildet ist.

16. System nach einem der Ansprüche 13 bis 15, **dadurch gekennzeichnet, dass** die Kennzeichnungseinheit (2) ein Mobiltelefonmodul (23) zur Übertragung der Zell- und Basisstationsinformation eines Mobiltelefonnetzes an die zentrale Einrichtung (6) aufweist.

17. System nach einem der Ansprüche 13 bis 16, **dadurch gekennzeichnet, dass** die Kennzeichnungseinheit (2) zumindest einen Sensor (22) zur Erfassung von Parametern des Objekts (1) oder der Umgebung des Objekts (1), beispielsweise einen Temperatursensor, Feuchtigkeitssensor, Beschleunigungssensor od. dgl. aufweist.

18. System nach Anspruch 17, **dadurch gekennzeichnet, dass** die Einrichtung (8) zur Bestimmung der geographischen Position ein Satellitennavigationssystem beinhaltet.

19. System nach einem der Ansprüche 13 bis 18, **dadurch gekennzeichnet, dass** die Kennzeichnungseinheiten (2) Speicher (19) für zusätzliche Informationen über das Objekt (1) aufweisen.

20. System nach einem der Ansprüche 13 bis 19, **dadurch gekennzeichnet, dass** die zentrale Einrichtung (6) eine Verbindung zu einem Datennetz, insbesondere dem Internet (15), aufweist.

21. Kennzeichnungseinheit (2) für ein System nach einem der Ansprüche 13 bis 20 mit einem Mittel (17) zum Speichern einer eindeutigen Kennung (ID_{O}) und mit Mitteln (17) zur drahtlosen Übertragung zumindest der eindeutigen Kennung (ID_{O}), **gekennzeichnet durch** ein Gehäuse (24), enthaltend den Speicher (17) zum Speichern der eindeutigen Kennung (ID_{O}), die Übertragungsmittel (17) und eine Kontrolleinrichtung (18).

22. Kennzeichnungseinheit (2) nach Anspruch 21, **dadurch gekennzeichnet, dass** eine Spannungsversorgung (25) vorgesehen ist.

23. Kennzeichnungseinheit (2) nach Anspruch 21 oder 22, **dadurch gekennzeichnet, dass** zumindest ein Sensor (22), beispielsweise ein Temperatursensor, Feuchtigkeitssensor, Beschleunigungssensor od. dgl. vorgesehen ist.

24. Kennzeichnungseinheit (2) nach einem der Ansprüche 21 bis 23, **dadurch gekennzeichnet, dass** eine optische Anzeigeeinrichtung (21) vorgesehen ist.

25. Kennzeichnungseinheit (2) nach einem der Ansprüche 21 bis 24, **dadurch gekennzeichnet, dass** eine akustische Ausgabeeinrichtung (21) vorgesehen ist.

26. Kennzeichnungseinheit (2) nach einem der Ansprüche 21 bis 25, **dadurch gekennzeichnet, dass** ein weiterer Speicher (19) für zusätzliche Informationen vorgesehen ist.

27. Kennzeichnungseinheit (2) nach einem der Ansprüche 21 bis 26, **dadurch gekennzeichnet, dass** eine Schnittstelle (20) vorgesehen ist.

28. Kennzeichnungseinheit (2) nach einem der Ansprüche 21 bis 27, **dadurch gekennzeichnet, dass** ein Kommunikationsmodul (23), insbesondere ein Mobiltelefonmodul vorgesehen ist.

29. Kennzeichnungseinheit (2) nach einem der Ansprüche 21 bis 28, **dadurch gekennzeichnet, dass** das Gehäuse (24) flüssigkeits- und/oder gasdicht ausgebildet ist.

30. Kennzeichnungseinheit (2) nach einem der Ansprüche 21 bis 29, **dadurch gekennzeichnet, dass** am Gehäuse (24) Befestigungsmittel angeordnet sind.

31. Leseeinrichtung (11) für ein System nach einem der Ansprüche 13 bis 20, mit einer Einrichtung (12) zur Kommunikation mit den Übertragungsmitteln (17) der Kennzeichnungseinheit (2) und einem Funkmodul (13), **dadurch gekennzeichnet, dass** die Kommunikationseinrichtung (12) durch eine Datenübertragungseinrichtung, beispielsweise einen Mobilfunkempfänger, oder einen Radiofrequenz-Empfänger gebildet ist.

32. Leseeinrichtung (11) nach Anspruch 31, **dadurch gekennzeichnet, dass** ein Speicher (28) vorgesehen ist.

33. Leseeinrichtung (11) nach Anspruch 31 oder 32, **dadurch gekennzeichnet, dass** eine Spannungsversorgung (33) vorgesehen ist.

34. Leseeinrichtung (11) nach einem der Ansprüche 31 bis 33, **dadurch gekennzeichnet, dass** zumindest ein Sensor (30), beispielsweise ein Temperatursensor, Feuchtigkeitssensor, Beschleunigungssensor od. dgl. vorgesehen ist.

35. Leseeinrichtung (11) nach einem der Ansprüche 31 bis 34, **dadurch gekennzeichnet, dass** eine optische Anzeigeeinrichtung (31) vorgesehen ist.

36. Leseeinrichtung (11) nach einem der Ansprüche 31 bis 35, **dadurch gekennzeichnet, dass** eine akustische Ausgabeeinrichtung (32) vorgesehen ist.

37. Leseeinrichtung (11) nach einem der Ansprüche 31 bis 36**, dadurch gekennzeichnet, dass** ein weiterer Speicher (28) für zusätzliche Informationen vorgesehen ist.

38. Leseeinrichtung (11) nach einem der Ansprüche 31 bis 37, **dadurch gekennzeichnet, dass** eine Schnittstelle (29) vorgesehen ist.

39. Mobile Positionsbestimmungseinrichtung (8) für ein System nach einem der Ansprüche 13 bis 20, mit Mitteln (9) zur Bestimmung der geographischen Position, Mitteln (10) zur Übertragung der geographischen Position mit der jeweiligen Zell- und Basisstationsinformation des Funknetzes (5) an die zentrale Einrichtung (6), **dadurch gekennzeichnet, dass** die Mittel (9) zur Bestimmung der geographischen Position durch ein Satellitennavigationssystem gebildet ist.

40. Zentrale Einrichtung (6) für ein System nach einem der Ansprüche 13 bis 20, **gekennzeichnet durch** eine Rechnereinheit (43) mit einem Funkempfänger (14) zur Kommunikation mit der Kennzeichnungseinheit (2) und der allfälligen Leseeinrichtung (11).

41. Zentrale Einrichtung (6) nach Anspruch 40, **dadurch gekennzeichnet, dass** eine Verbindung (44) zu einem Datennetz, insbesondere dem Internet (15), vorgesehen ist.
